# EUROPEAN PATENT APPLICATION

(11) **EP 4 446 068 A1**
(43) Date of publication of application: **16.10.2024**
(21) Application number: 24170177.0
(22) Date of filing: 15.04.2024
(51) Int. Cl.: B25J 9/16

(54) **MASTER-SLAVE ROBOT SYSTEM**

(30) Priority: 13.04.2023 JP 2023065660
(71) Applicant: DENSO WAVE INCORPORATED, Chita-gun, Aichi-pref. 470-2297 (JP)
(72) Inventor: TERASHITA, Shogo, Agui-cho, Chita-gun, Aichi-pref., 470-2297 (JP)
(74) Representative: Winter, Brandl - Partnerschaft mbB

(57) **Abstract**

In a master-slave robot system (10), the posture of a master robot (20) is changed by an external force applied by the operator, while the posture of a slave robot (30) is controlled to match that of the master robot. A controller (26, 36) controls the master robot (20) and the slave robot (30). The master and slave robot (20, 30) each have a plurality of links (22a - 22f) and a plurality of axes (J1 - J6) i.e., joints (JT1 - JT6) each connecting adjacent links to form a robot arm. Each axis (J1 - J6) is connected to both ends of the two adjacent links to allow the two links to rotate relatively to each other. The controller (26, 36) eliminates a spatial mismatch between the master and slave robot's postures. In control for the posture matching operation, all the multiple axes (J1 - J6) of the master robot (20) are divided, in control for the posture matching operation, into multiple groups, and the axes (J1 - J6) are driven group by group in a sequence, thereby enabling the posture of the master robot (20) to match the posture of the slave robot (30).

## Description

### Background

### [Technical Field]

The present invention relates to a master-slave robot system, and in particular, an industrial master-slave robot system with a master robot whose posture is changed by an external force applied by the operator, and a slave robot whose posture is controlled to match the posture of the master robot.

### [Related Art]

In robot systems for industrial use, it is usually required to previously teach an industrial robot how to move during work assigned to the robot. One of such teaching systems is known as a robot teaching method which provides an industrial robot with a direct control mode and a detail control mode which can be switched therebetween. In the direct control mode, the posture of a target robot is controlled to match the posture of an operating robot operated by the operator, while in the detail control mode, when the magnitude of an external force detected by a detection unit exceeds a preset threshold value, the posture of the target robot is controlled in the unit of motion which is preset in the direction of the detected external force.

For example, in the teaching system described in the reference 1, in the detail control mode, the posture of an operating robot is matched to the posture of a target robot when there is a positional mismatch between the postures of the operating and target robots.

### [Prior Art Reference]

### [Patent Documents]

[Patent Reference 1] JP-A-2019-55458

### [Problems to be solved]

By the way, in the teaching system described in the patent reference 1, as described, the posture of the robot arm of the operating robot (i.e., a master robot) is matched to the posture of the robot arm of the target robot (i.e., a slave robot). In these matching operations, the posture of the operating robot, which is manually operated by the operator, is likely to change suddenly. If such sudden changes in the posture are caused, it becomes difficult for the operator to predict afterward the operating robot's movement trajectory afterward.

### Summary

The present invention has been made to solve these problems, and a main purpose of the present invention is to make it easier for the operator to predict the motion trajectory of the master robot in a master-slave robot system when the posture of the master robot (i.e., the posture of the robot arm) is matched to the posture of the slave robot (i.e., the posture of the robot arm) in a master-slave robot system even if the foregoing sudden changes in the posture of the master robot are caused due to operator's manual operations.

In order to achieve the object, as one mode of the disclosure, there is provided a master-slave robot system comprising a master robot of which posture is changed by an external force applied by an operator to the master robot, a slave robot of which posture is changed to follow the posture of the master robot, and a controller which controls motions of the master and slave robots. Each of the master and slave robots is provided with a robot arm, the robot arm having a plurality of links mutually connected serially and a plurality of joints each connecting, of the links, mutually adjacent two links such that the two links are relatively rotatable about a same axis provided by each of the joints. The controller is adapted to match the posture of the master robot with the posture of the slave robot, by driving, in control thereof, the axes of the robot arm of the master robot in an order of axis groups in a sequence, all the plural axes of the master robot being divided into the axis groups, when the controller eliminates a mismatch between the posture of the master robot and the posture of the slave robot.

According to this configuration, the master-slave robot system is equipped with a master robot whose posture is changed by an external force applied by an operator, a slave robot whose posture is controlled to match the posture of the master robot, and a controller adapted to control the master robot and the slave robot. Thus, this allows the operator to apply an external force to the master robot to change the posture of the master robot. In response to such changes of the mater robot posture, it is possible to allow the slave robot to be controlled so that its posture matches that of the master robot (hereinafter referred to as "main slave-robot operation").

By way of example, the controller may include a first controller installed in the master robot to control the master robot and a second controller installed in the slave robot to control the slave robot.

Alternatively, the controller may be a single controller provided on the master robot or the slave robot to control both the master robot and the slave robot.

Here is the background of the present invention. Before starting the main slave-robot operation, the posture of the master robot and the posture of the slave robot may be misaligned or mismatched.

A further case is that if the slave robot's posture is fine-tuned (changed) without mutual matching between the pictures of the slave and master robots, a mismatch between the postures of the master and the slave robots may be widened.

As another case is that, if the type (shape) of the master robot and the type (shape) of the slave robot are different from each other, a mismatch may occur between the postures of the master and slave robots during the execution of the main slave-robot operation.

In these cases, simply executing an operation to match the posture of the master robot with the posture of the slave robot (hereinafter referred to as "posture matching operations") will cause the master robot to change suddenly its posture. If such sudden posture changes occur, the operator has difficulty in predicting a motion trajectory of the master robot which is planned to be traced.

In the current master-slave robot system, the master robot and the slave robot are equipped with a plurality of links connected in a relative rotatable manner and a plurality of axes that rotate the adjacent links relatively to each other. In such a robot configuration, for example, if all the axes of the master robot are driven simultaneously to match the rotational positions of all the axes of the slave robot with those of the master robot, it is also difficult for the operator to predict a motion trajectory of the master robot.

Such inconveniences are largely improved by the present invention.

The reason is that, when eliminating a misalignment or mismatch between the postures of the master and slave robots, all the mutually corresponding multiple axes of the master and slave robots are divided into multiple axis groups, and the controller drives the axes of the master robot, group by group, in a sequence, whereby the posture of the master robot is matched to the posture of the slave robot. Dividing the multiple axes is intended to perform only the posture matching operation on a divided axis group basis. Hence, when performing the posture matching operation, all the axes of the master robot can be driven group by group in turn, instead of driving all the axes of the master robot simultaneously. Therefore, in the posture matching operation, the posture of the master robot can be changed step by step, and the operator can easily predict a motion trajectory of the master robot which should be traced.

In the foregoing configuration, as an exemplary embodiment, it is preferred that each of the plural axis groups is composed of only one of the axes of the robot arm of the master robot. According to this configuration, the multiple axes of the master robot can be driven one by one in turn when eliminating a mismatch between the posture of the master robot and the posture of the slave robot. Therefore, the posture of the master robot can be finely changed in stages, and the operator can more easily predict a motion trajectory of the master robot.

In the foregoing configurations, as an exemplary third embodiment, it is also preferred that, when eliminating a mismatch between the postures of the master and slave robots, the controller is adapted to drive the axes of the robot arm of the master robot in the order of axis groups, group by group, in the sequence, the order of axis groups starting from an axis group composed of the axis located on a tip end side of the robot arm of the master robot, such that the posture of the master robot is matched with the posture of the slave robot.

According to this configuration, when eliminating a mismatch between the postures of the master and slave robots, the axes can be driven in the order starting from the axes with the smallest changes in rational positions to the axes with the largest changes in rotational positions. Thus, the operator can predict that current changes in the posture of the master robot will become larger in turn, thereby making it easier for the operator to take safe countermeasures.

In the two foregoing configurations, as an exemplary fourth embodiment, when eliminating a mismatch between the postures of the master and slave robots, the controller is adapted to drive the axes of the robot arm of the master robot in the order of axis groups, group by group, in the sequence, the order of axis groups starting from an axis group composed of the axis located on a base side of the robot arm of the master robot, such that the posture of the master robot is matched with the posture of the slave robot.

According to this configuration, when eliminating a mismatch between the postures of the master and slave robots, the axes can be driven in the order starting from the axes with the largest changes in rational positions to the axes with the smallest changes in rotational positions. Hence, the operator can predict that changes in the posture of the master robot will become smaller in turn, thereby making it easier to predict the final posture of the master robot which is to be provided when the posture matching operations are completed. Also, the operator can easily notice that the posture matching operation started at an earlier stage of this operation, and can easily take countermeasures such as moving away from the master robot as quickly as possible.

In the two foregoing configurations, as an exemplary fifth embodiment, when eliminating a mismatch between the postures of the master and slave robots, the controller is adapted to drive the axes of the robot arm of the master robot in the order of axis groups, group by group, in the sequence, the order of axis groups starting from an axis group composed of mutually corresponding axes of both the master and slave robots, the mutually corresponding axes having a rotational positional difference smaller than that of the other axes, such that the posture of the master robot is matched with the posture of the slave robot.

As a result, the axes of the master robot can be driven in the order from the axes with the smallest amount of rotation to the axes with the largest amount of rotation. Thus, the operator can predict that the amount of rotation of the axes of the master robot will increase in turn. This production can urge the operator to take safer countermeasures.

In the two foregoing configurations, as an exemplary sixth embodiment, when eliminating a mismatch between the postures of the master and slave robots, the controller is adapted to drive the axes of the robot arm of the master robot in the order of axis groups, group by group, in the sequence, the order of axis groups starting from an axis group composed of mutually corresponding axes of both the master and slave robots, the mutually corresponding axes having a rotational positional difference larger than that of the other axes, such that the posture of the master robot is matched with the posture of the slave robot.

According to this configuration, the axes of the master robot can be driven in the order from the axes with the largest amount of rotation to the axes with the smallest amount of rotation. The operator can thus predict that the amount of rotation of the axes of the master robot will become smaller in turn, thereby making it easier to predict a final posture of the master robot provided in the state where the posture matching operation is completed. Also, the operator can easily notice that the posture matching operation has started already, and can easily take countermeasures such as moving away from the master robot as quickly as possible.

In the two foregoing configurations, as an exemplary seventh embodiment, when eliminating a mismatch between the postures of the master and slave robots, the controller is adapted to drive the axes of the robot arm of the master robot in the order of axis groups, group by group, in the sequence, the order of axis groups being designed by the operator, such that the posture of the master robot is matched with the posture of the slave robot.

As a result, the operator can freely specify the order in which the axes of the master robot are driven. This makes it easier, for example, for the operator to avoid obstacles which are present in a robot movement space during the posture matching operation. Also, since the operator specifies the axis-driving order, it is easier to predict a motion trajectory of the master robot which is to be traced.

In the two foregoing configurations, as an exemplary eight embodiment, the master-slave robot system is equipped with a display unit, and the controller is adapted to make the display unit display thereon an axis to be driven of the master robot before driving the axis of the master robot, during an operation in which the posture of the master robot is matched with the posture of the slave robot.

According to this configuration, the operator can easily predict a motion trajectory of the master robot because the axes to be driven by the master robot is displayed in advance by the display unit when eliminating a mismatch between the postures of the master and slave robots. This makes it easier for the operator to predict a motion trajectory of the master robot.

In the two foregoing configurations, as an exemplary ninth embodiment, the system is equipped with a display unit, and the controller is adapted to make the display unit display thereon an axis of the master robot which is currently driven, during an operation in which the posture of the master robot is matched with the posture of the slave robot.

Hence, the axes being currently driven by the master robot are displayed on the display, thus making it easier for the operator to recognize the axis being driven currently, even when the amount of rotation of the axes is smaller.

### Brief Description of the Drawings

In the accompanying drawings;
Fig. 1 is an illustration pictorially showing a master-slave robot system of embodiments;
Fig. 2 is an illustration exemplifying tables in which angles of respective axes of each of the robot arms of industrial robots in the master-slave robot system;
Fig. 3 is a flowchart exemplifying how a posture matching operation is performed between master and slave robots in a first embodiment;
Fig. 4 is a flowchart exemplifying how a posture matching operation is performed between master and slave robots in a modification of the first embodiment;
Fig. 5 is a flowchart exemplifying how a posture matching operation is performed between master and slave robots in a second embodiment;
Fig. 6 is a flowchart exemplifying how a posture matching operation is performed between master and slave robots in a modification of the second embodiment;
Fig. 7 is a flowchart exemplifying how a posture matching operation is performed between master and slave robots in a third embodiment; and
Fig. 8 is a flowchart exemplifying how a posture matching operation is performed between master and slave robots in a fourth embodiment.

### Descriptions of the Preferred Embodiments

### <First embodiment>

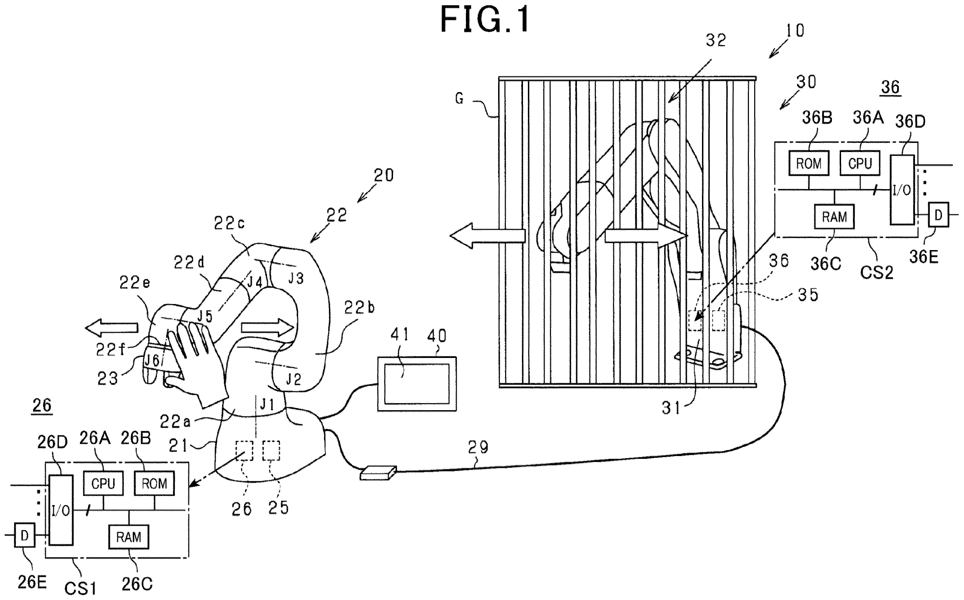

With reference to Figs. 1 to 4, a first embodiment of a master-slave robot system practiced according to the present invention will now be described.

As shown in Fig. 1, there is provided a master-slave robot system 10 for industrial use, which is equipped with a master robot 20 and a slave robot 30.

The master robot 20 (functioning as a main robot) is, for example, a 6-axis vertical multi-joints type robot, equipped with a base 21 and a robot arm 22 (also, simply referred to an arm). The master robot 20 is equipped with a base (base) 21 and a robot arm 22 (also referred to simply as an arm or a manipulator). The robot arm 22 is equipped with a plurality of arms (links) 22a to 22f, which are mutually connected serially and are rotatable to each other. Of the plurality of arms (links) 22a to 22f, arms 22a and 22b (22c to 22f) which are adjacent to each other are rotatably connected relative to each other via the joint J1T (to the joint JT6) that presents a rotation axis J1 (to J6). Each of the joints J1T to JT6 is structurally configured as the central rotation axis of each of the motors. Each of the motors is driven via a reduction gear and other devices (not shown).

In detail, the master robot 20 has a shoulder 22a connected to the base 21 (link) via the first axis (J1), which is a rotation axis perpendicular to the installation surface, and rotatable in the horizontal direction. The shoulder 22a (link) is vertically rotatably connected to the lower end of lower arm 22b, which extends upward via the second axis (J2), where the second axiws is a rotation axis parallel to the installation surface. The tip of the lower arm 22b (link) is vertically rotatably connected to the first upper arm 22c via the third axis (J3), where the third axis is the rotation axis parallel to the installation surface.

At the tip of the first upper arm 22c (link), the second upper arm 22d is connected via the fourth axis (J4), which is a rotation axis orthogonal to the third axis and can be twisted and rotated. At the tip of the second upper arm 22d (link), a wrist 22e is vertically rotatably connected via the fifth axis (J5), which is a rotation axis parallel to the installation surface. The wrist 22e (link) is connected to the flange 22f via the sixth axis (J6), which is a rotation axis orthogonal to the fifth axis, and is capable of being twisted and rotated.

A hand 23 is attached to the end of robot arm 22 which is composed of a flange 22f (link). The hand 23 is equipped with a pair of claws, for example, and is configured to perform an opening and closing motion to expand and contract the distance provided between the pair of claws.

Inside the base 21, there are provided a memory unit 25 that stores therein history data showing fine-tuning operations, which will be described later, and a controller 26 configured to control the operations of master robot 20 and its hand 23. The controller 26 has a computer CS1 with elements such as a CPU 26A, a ROM 26B, a RAM 26C, and an I/O interface 26D, and a drive circuit 26E. The ROM 26B pre-stores therein various programs to be executed by the CPU 26A. The CPU 26A is the central element of the arithmetic functions performed by the controller 26. When the CPU 26A performs a specified process, the CPU 26A calls a program for that process from the ROM 26B into its work area and executes that program while using the RAM 26C as temporary storage memory. Such programs include the control program for a posture matching operation which will be described later. The information and instructions outputted during the execution of the programs are sent to external devices, motors, brakes, etc., via the interface 26D and/or drive circuit 26E, for their control.

Each of the joints JT1 to JT6 of the master robot 20 is equipped with an encoder (not shown) that detects the rotation angle (rotation position) of each of axes J1 to J6 (i.e., the respective motors). In other words, the encoders detect the position and direction of a control point of the robot arm 22 (hereinafter referred to as a posture of the robot arm 22). The control point can be selected from the center of the tip (i.e., the flange 22F) of the robot arm 22 and the middle point between the pair of claws (which is referred to as a TCP: Tool Center Position).

A brake (not shown) is provided on each of the joints JT1 to JT6 of the master robot 20. The brakes are configured to brake the rotation of each of the joints JT1 to JT6 and stop the rotation angle of each of the axes J1 to J6 from being changed.

The controller 26 (i.e., CPU 26A) controls the posture of the robot arm 22 according to the external force acting on the robot arm 22. Practically, the controller 26 performs flexible control to make the robot arm 22 move in accordance with external forces by generating torques corresponding to each axis with motors that compensate only gravity and frictional forces acting on the robot arm 22. The controller 26 maintains the posture of the robot arm 22 when the external force acting on the robot arm 22 is eliminated. In other words, the master robot 20 can change and hold the posture of the robot arm 22 according to the external forces applied by the operator. In the present embodiment, the operator can directly and manually hold and move the robot arm 22 responsively to the direct teaching and can hold the posture of that robot arm 22 (in the direct teaching mode). The controller 26 transmits the detection results of the encoders on the joints JT1 to JT6 of the master robot 20 to the controller 36 of the slave robot 30.

The master robot 20 is communicably connected to the slave robot 30, which can communicate with each other by means of a cable 29. The slave robot 30 is, for example, the same type as the master robot 20 (e.g., 6-axis vertical multi-joints type) and is larger in size than the master robot 20. The slave robot 30 is installed inside a safety fence G. The slave robot 30 has the same configuration as that of the master robot 20 except that the slave robot is larger in size and has a slightly different shape than that of the master robot 20. The robot 30 has a base 31 and a robot arm 32 (also simply referred to as an arm or manipulator). A hand (not shown) is attached to the tip of the robot arm 32. The axes (also referred to as corresponding axes) of the multiple joints of the robot arm 32 of the slave robot 30 correspond to the axes J1 to J6 of the joints JT1 to JT6 of the robot arm 22 of the master robot 20, respectively.

Inside the base 31, there is provided a controller 36 that controls the operations of the slave robot 30 and its hand. The controller 36 is configured in the same manner as the controller 26 of the master robot 20 described in the foregoing. In other words, the controller 36 has a computer CS2 with elements such as a CPU 36A, a ROM 36B, a RAM 36C, and an I/O interface 36E, and a drive circuit 36D. The ROM 36B pre-stores therein various programs to be executed by the CPU 36A. The CPU 36A is the element that plays an essential role in the arithmetic functions performed by the controller 36. When the CPU 36A initiates performance of a specified process, the CPU 36A calls the program for that process from the ROM 36B into its work area and executes the read program while using the RAM 36C as temporary storage memory. Such programs include a control program for the posture matching operations which will be described later, which is executed in cooperation with the controller 26 of the master robot 20. Information and instructions outputted by this program execution are sent to external devices, motors, brakes, etc. via the interface 36D and/or the drive circuit 36E.

Thus, the controllers 26 and 36 of both the master robot 20 and the slave robot 30 can communicate with each other via the cable 29, and both the CPUs 26A and 36A are able to send and receive information from each other. This enables mutual communication and posture control between the master robot 20 and slave robot 30, which are provided in a master-slave relationship, where the posture control includes posture matching operations which are described later.

In the same way as the axes of the mater robot 20, each of the axes (i.e., each of the joints) of the slave robot 30 is equipped with an encoder (not shown) that detects the rotation angle of each axis. In other words, the encoders detect the position and direction of a control point assigned to the robot arm 32 (hereinafter referred to as posture of the robot arm 32). The control point can selectively set as the center of the tip of the robot arm 32 or the middle point provided between a pair of claws (TCP: Tool Center Position), for example.

A brake (not shown) is provided in each of the joints (providing the axes) of the slave robot 30. The brake brakes each of the axes and stop the angular change of each axis.

As can be seen from the above description, the "axes" of the master robot 20 and slave robot 30 are not only the physical axes (rotation axes each passing along the central axis of each of the motor shaft) provided by the joints JT1 to JT6 of those robot arms 22 and 32 but also the geometrical axes provided between the mutually adjacent arms (links) which relatively rotate to each other. For this reason, the term "axis" is used hereafter simply to include both physical and geometric concepts. This designation also applies to the other embodiments described below.

The controller 36 (specifically, the CPU 36A) is adapted to control the motors installed in each of the joints (axes) of the slave robot 30 so that the angle of each of the axes of the slave robot 30 matches the angles of the respective axes of the master robot 20. In other words, the controller 36 is operated by the operator to change the posture of the master robot 20 by applying an external force to the master robot 20. This operation controls the posture of the slave robot 30 to match (or follow) the posture of the master robot 20 (hereinafter referred to as "main slave-robot operation").

In detail, the controller 36 (specifically, the CPU 36A) feedback-controls the motors assigned to the respective axes of the slave robot 30 based on detection results of the encoders (not shown) of the respective joints of both the master robot 20 and the slave robot 30. In other words, the respective axes of the slave robot 30 follow the motions of the respective axes of the master robot 20. The controller 36 is adapted to transmit the detection results of the encoders of the respective joints of the slave robot 30 to the controller 26 of the master robot 20. The controller 26 of the master robot 20 and the controller 36 of the slave robot 30 functionally provides a controller for the master-slave robot system.

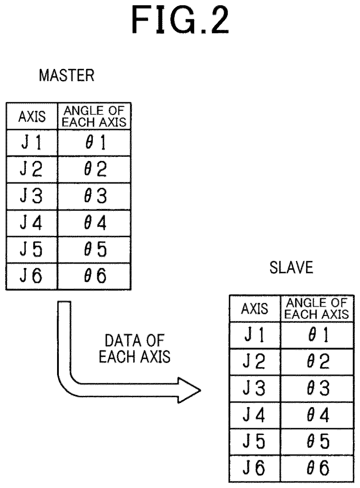

As shown in Fig. 2, when the main slave-robot operation is performed, the angles θ1 to θ6 at the respective axes of the robot arm of the slave robot 30 are matched to the angles θ1 to θ6 at the respective axes of the robot arm of the master robot 20.

Returning to Fig. 1, the master robot 20 is connected to an operation unit 40 for an operator's manual use. The controller 40 can be provided as a teaching pendant, a tablet terminal, smartphone, a notebook PC, a PC, or other calculation devices. For example, the operation unit 40 has a display 41 composed of a touch panel that accepts operator's touch operations and displays information indicated by the controller 26. The operator controls the master robot 20 and slave robot 30 with the controllers 26 and 36, by manually operating the operation unit 40. The operation unit 40 may be equipped with a keyboard (operation keys) or other devices to accept operator's manual key operations.

When the start of the main slave-robot operation is instructed by the operator, the operation unit 40 causes both the controllers 26 and 36 to start the main slave-robot operation. In this situation, before the main slave-robot operation is started, the controller 26 performs operations to match the current posture of the master robot 20 with the current posture of the slave robot 30 (hereinafter referred to as the posture matching operation).

The operation unit 40 also enables the operator to perform inching operations that move the robot arm 32 of the slave robot 30 in the smallest or minute units. The operator can operate the operation unit 40 to set the unit for changing the posture of the robot arm 32 to 0.1 to 1.0 [mm], for example. By operating the operation unit 40, the operator makes the posture of the robot arm 32 move inching in the set unit via the controllers 26 and 36 (hereinafter, this movement is referred to as a fine-tuning operation). In the present embodiment, the controller 26 is adapted to store the history of this fine-tuning operation in a memory unit 25.

The operation unit 40, memory unit 25, controller 26, and controller 36 functionally constitute a fine-tuning unit. Thus, the fine-tuning unit enables the fine-tuning operation in which the operator can instruct a fine-tune of the posture of the slave robot 30 in a state where the posture of the slave robot 30 still does not match the posture of the master robot 20. The fine-tuning unit also stores the history of its fine-tuning operations. The controller 26 is also adapted to execute the posture matching operation when the amount of mismatch between the posture of the master robot 20 and the posture of the slave robot 30 exceeds a predetermined threshold during performance of the fine-tuning operation.

Before executing the posture matching operation, the controller 26 is configured to display an operation image of the posture matching operation on the display 41 of the operation unit 40. The operation image includes an image that accepts an instruction that permits the operator to start the posture matching operation. When the controller 26 accepts an operator's operation that permits the start of the posture matching operation on the display 41, the controller 26 instructs to start the posture matching operation. The operator's operation is, for example, the operation of simultaneously pressing an "operation permit button" and an "OK button" on the display 41.

Next, the posture matching operation will be described.

In this posture matching operation, it is assumed a situation in which the angles of the respective axes J1 to J6 of the master robot 20 (i.e., the axes presented by the joints JT1 to JT6) are simply matched to the angled of the corresponding axes of the slave robot 30. In this case, the angles of the respective axes J1 to J6 of the master robot 20 are forced to change abruptly, thus making it difficult for the operator to predict a motion trajectory of the master robot 20. For example, if all the axes J1 to J6 of the master robot 20 are driven simultaneously to match the rotational positions of all the axes J1 to J6 of the master robot 20 with the rotational positions of all corresponding axes of the slave robot 30, the operator has difficulty in predicting a following motion path of the master robot 20.

Such an inconvenience is taken into account when the controller 26 (specifically CPU 26A) operates to prevent a mismatch (gap) between the posture of master robot 20 and the posture of slave robot 30. In other words, the controller 26 operates to divide all the axes J1 to J6 (i.e., all the joints JT1 to JT6) of the master robot 20 into multiple groups and drive the axes of the master robot 20 in sequence every group unit. This drive brings the posture of the master robot 20 to follow and match the posture of the slave robot 30, so that the mismatch is prevented. Each of the multiple groups of the axes of the master robot 20, which are divided virtually for control, may contain only one axis or may contain multiple axes.

The order of the groups that drive in turn the axis groups of the master robot 20 may take various forms. For example, the order of the axis groups for drive starts from a group that includes the axis on the tip side (J16 side) of the robot arm 22 of the master robot 20. Alternatively, the order of the axis groups for drive starts from a group which include, of the axes of the robot arm of the master robot 20, an axis which shows a smaller difference in rotational position with respect to a corresponding axis of the slave robot 30.

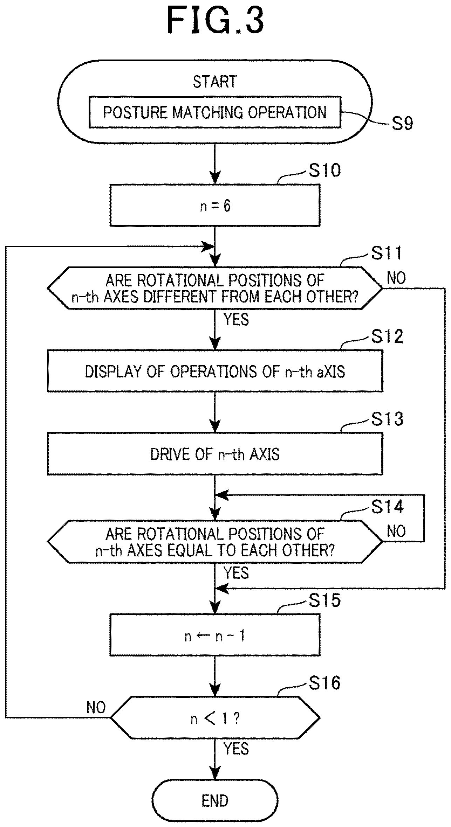

Fig. 3 is a flowchart showing a control procedure for posture matching operations. This control is performed cooperatively by the controllers 26 and 36 (i.e., CPUs 26A and 36A) of both the robots 20 and 30 which cooperate with each other through mutual communication as necessary, in accordance with the processing procedure shown in the flowchart in Fig. 3. This cooperative control is also true of the other embodiments, which will be described later. The series of processes shown in Fig. 3 are executed by the controller 26 (i.e., CPU 26A) when an operator's operation allowing the start of posture matching operations is accepted on the display 41 (step S9).

In the present embodiment, each of the multiple groups of the axes contain only one axis of the robot arm of the master robot 20. In other words, the controller 26 drives the axes J1 to J6 of the master robot 20 in sequence axis by axis (i.e., one axis at a time) in the posture matching operation.

First, the variable n = 6 is set (step S10), and it is determined whether the rotational positions of the n-axes of the master robot 20 and slave robot 30 differ from each other (step S11). For example, since the variable n = 6 is set, it is determined whether the absolute value of a difference (i.e., a mismatch) between the rotational positions of the 6-th axis of the master robot 20 and the 6-th axis of the slave robot 30 is greater than a positive first threshold value. The first threshold value is set as a positive rotation angle which distinguishes whether there is a not-negligible difference in rotational positions between both the robot arms. Such positive rotation angle is, for example, 1 [°]. Alternatively, based on a ratio of the rotation position of the n-axis of the master robot 20 to the rotation position of the n-axis of the slave robot 30, it is also possible to determine whether the rotation positions of the n-axes are different from each other. In this judgment, if it is determined that the rotational positions of the n-axes of the master robot 20 and slave robot 30 are not different (step S11: NO), the process proceeds to step S15.

On the other hand, if it is determined in the judgment of step S11 that the rotational positions of the n-axes of the master robot 20 and slave robot 30 are different from each other (step S11: YES), the motion of the n-axis of the master robot 20 is displayed on the display 41 of the operation unit 40 (step S12). For example, a simulation image showing an operation of the master robot 20 is displayed on the display 41 of the operation unit 40, and in the simulation image, an animation of the operation to match the rotation position of the n-axis of the master robot 20 with the rotation position of the n-axis of the slave robot 30 is displayed.

In this case, as a modification, the simulation image of the master robot 20 may be displayed by the display unit 41 of the operation unit 40 to show that the n-axis of the master robot 20 is allowed to be operated or driven, by displaying the n-axis in color or blinking on the display unit 41.

Next, it is determined whether the rotational positions of the n-axes of the master robot 20 and slave robot 30 are identical, that is, no mismatch (step S14). Since n = 6 is set in the present embodiment, it is determined whether an absolute value of the difference between the rotational positions of the 6-axis of the master robot 20 and the 6-axis of the slave robot 30 is judged to be smaller than a positive second threshold value. The second threshold value is set to be a positive rotation angle that can be regarded as the matched rotational positions if the difference is below the second threshold value, and the second threshold value is smaller than the foregoing first threshold value, for example, 0.1 [°].

As described, alternatively, based on a ratio of the rotational position of the n-axis of the master robot 20 to the rotational position of the n-axis of the slave robot 30, it is also possible to determine whether the rotational positions of the n-axes have no difference therebetween.

In this judgment, if it is determined that the rotational positions of the n-axes of both the master robot 20 and slave robot 30 do not match (step S14: NO), the judgment in step S14 is repeated.

On the other hand, if it is determined that the rotational positions of the n-axes of the master robot 20 and slave robot 30 match (step S14: YES), the value of n-1 is used as the new value of n (step S15). In other words, the variable n is decremented by 1.

Next, it is determined whether the variable n is less than 1 or not (step S16). That is, from the 6-th axis (i.e., the tip axis) of the master robot 20 to the first axis (i.e., the base axis), it is judged whether the operation to match the rotational position of the axis of the master robot 20 to the rotational position of the corresponding axis of the slave robot 30 has been completed. If this judgment determines that the variable n is not smaller than 1 (step S16: NO), the process is executed again from step S11.

In short, when eliminating the fact that there is a difference, i.e., spatial mismatch or deviation, between the posture of the master robot 20 and that of the slave robot 30, the axes of the master robot 20 are driven in sequence in the order from the axis of the tip side of the master robot 20 (i.e., the group including the tip side axis). Hence, the posture of the robot arm of the master robot 20 is followed by that of the slave robot 30, thus being matched to the posture of the robot arm of the slave robot 30, axis by axis.

On the other hand, if the variable n is determined to be less than 1 (step S16: YES), this series of processing is terminated (END).

Operational advantages obtained the present embodiment are described.

The controller 26 eliminates a spatial mismatch provided between the posture of the master robot 20 and the posture of the slave robot 30. In this case, all the axes J1 to J6 (i.e., all the joints JT1 to JT6) of the master robot 20 are virtually divided into multiple groups of axes. The axes of the master robot 20 are driven in groups in sequence, and the postures of the slave robot 30 are, group by group, matched to the posture of the master robot 20. Thus, in the present embodiment, when performing posture matching operation, all of the axes J1 to J6 of the master robot 20 are not driven simultaneously, i.e., at the same time. In other words, all the axes J1 to J6 of the master robot 20 which are virtually divided into multiple groups are driven group by group in sequence. Therefore, in the posture matching operation according to the present embodiment, the posture of the master robot 20 can be changed step by step, making it easier for the operator to predict a motion trajectory of the master robot 20 which is to be taught.

By way of example, each of the multiple groups may include only one axis of the master robot 20. According to this configuration, the multiple axes of the master robot 20 can be driven one by one in turn when eliminating the mismatch left between the posture of the master robot 20 and the posture of the slave robot 30. Therefore, the posture of the master robot 20 can be further changed in steps, and the operator can more easily predict a motion trajectory of the master robot 20 which is to be traced.

In addition, the controller 26 can drive the axes of the master robot 20 in a sequence, starting from the group containing the axis on the leading end portion of the robot arm of the master robot 20 when eliminating a spatial mismatch between the posture of the master robot 20 and the posture of the slave robot 30. This also brings the posture of the master robot 20 into alignment with the posture of the slave robot 30. According to this configuration, when eliminating a special mismatch between the posture of the master robot 20 and the posture of the slave robot 30, the axes can be driven in the order from the axis J6, where changes in the posture of the master robot 20 is small, to the axis J1 where changes in the posture is large. Therefore, the operator can predict that the changes in the posture of the master robot 20 (i.e., the changes of the angles of the axes) will become larger gradually as approaching to the axis J6, which makes it easier for the operator to be safe in fine-tuning control for the posture matching operation.

The axes to be driven on the master robot 20 are displayed in advance on the display 41 of the operation unit 40 when eliminating a spatial mismatch, i.e., deviation, between the posture of the master robot 20 and the posture of the slave robot 30. This display makes it easier for the operator to predict a motion trajectory of the master robot 20 when operating the robots in a direct teaching mode.

The first embodiment may be implemented with the following modifications. The same or identical components as or to those in the first embodiment will be omitted from the explanation with the same reference numbers and symbols.

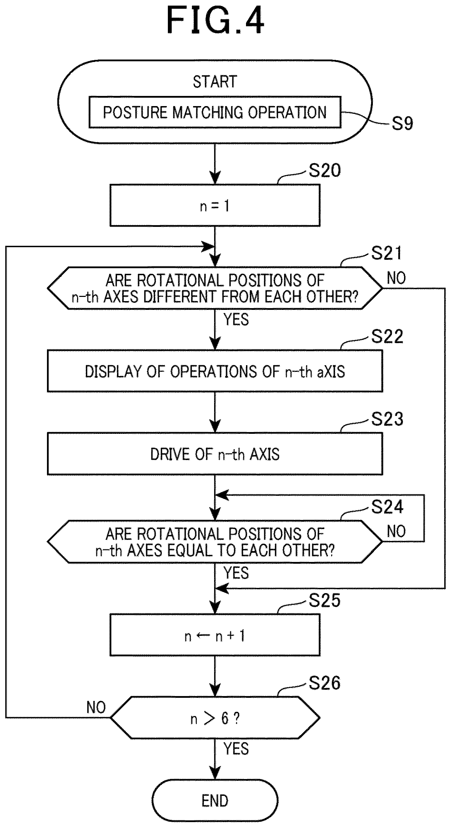

As shown in Fig. 4, the controller 26 (i.e., CPU 26A) can also change the processes shown in Fig. 3 into the processes with the following modifications. Instead of step S10, n = 1 is provided as step S20, instead of the step S15, a replacement of the variable n with n+1 is provided as step S25, and instead of the step S16, determination of whether the variable n is greater than 6 as step S26. The steps of S21 through S24 are the same as those of S11 through S14. In other words, when eliminating a spatial mismatch (gap) between the posture of the master robot 20 and that of the slave robot 30, the controller 26 drives the axes of the master robot 20 in the order from a group including the axis J1 located at the base end of the master robot arm 20. This also allows the posture of the master robot 20 to match the posture of the slave robot 30, thus providing similar advantages to the foregoing advantages.

According to the above modified configuration, when eliminating a spatial mismatch, i.e., gap, between the posture of the master robot 20 and that of the slave robot 30, the master robot 20 can be driven in sequence from the arm base-side axis J1, where the changes in its posture is larger, to the arm tip-side axis J6, where the changes in its posture is smaller. Therefore, the operator can easily predict that the changes in the posture of the master robot 20 will become smaller in turn, thus making it easier to predict the final posture of the master robot 20 provided when the posture matching operation is completed. Also, the operator can easily understand at an earlier stage of the posture matching operation that the posture matching operation has started, and can easily take countermeasures such as moving away from the master robot 20 as quickly as possible.

As another modification, each of the multiple groups can be provided to include only one axis of the axes of the master robot 20. According to this configuration, the multiple axes of the master robot 20 can be driven every axis in a serial sequence when eliminating a spatial mismatch caused the posture of the master robot 20 and the posture of the slave robot 30. Therefore, the posture of the master robot 20 can be further changed in steps, so that the operator can more easily predict a motion trajectory of the master robot 20 which is to follow from now.

### <Second embodiment>

A second embodiment of the master-slave robot system 10 will now be described.

In the present embodiment, the multiple groups of axes are provided by, in control for the posture matching operation, dividing all the axes J1 to J6 (i.e., all the joints JT1 to JT6) of the master robot 20 into multiple axis groups 1 to 3 each including two axes (or two or more axes) of the master robot 20. The term "in control for the posture matching operation" means that the joints (axes) are grouped such that the axes belonging to the same axis group are controlled in the same manner. An axis group 1 includes the axes J1 and J2 (composed of two mutually neighbored axes which are closet to the base), an axis group 2 includes the axes J3 and J4 (composed of two mutually neighbored axes, continued from the axes group 1), and an axis group 3 includes axes J5 and J6 (composed of two mutually neighbored axes, continued from the axes in group 2). All the axes of the robot arm of the slave robot 30 are also, in control for the posture matching operation, divided into three axis groups corresponding to the three axis groups of the master robot 20.

The other configurations are the same as those in the first embodiment. Hence, the same parts or components as those in the first embodiment will be omitted from their explanation, thus using the same symbols or numbers.

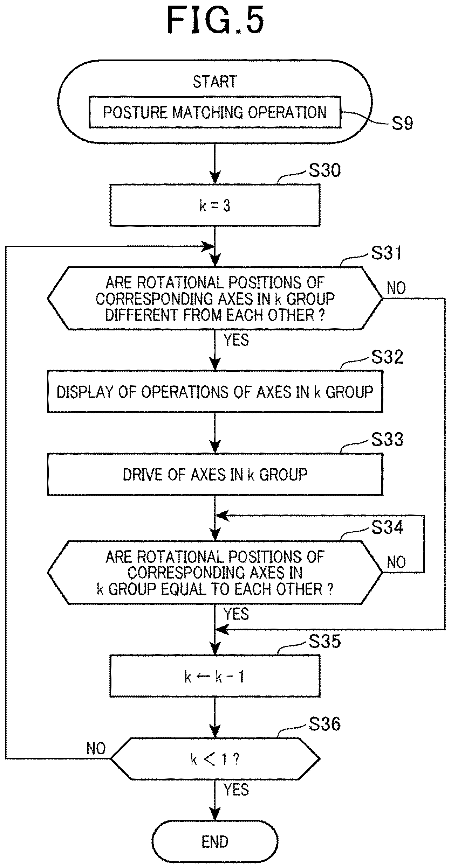

Fig. 5 is a flowchart showing the procedure of a posture matching operation performed in the second embodiment. This series of processes is executed by the controller 26 (i.e., the CPU 26A) when an operator's operation allowing the start of the posture matching operation is accepted on the display 41 (step S9). The controller 26 is adapted to drive all the axes J1 to J6 of the robot arm of the master robot 20, group by group, i.e., every two axes, in sequence in the posture matching operation.

First, a variable k is set to k = 3 (step S30), and it is determined whether there is a difference, i.e., a spatial mismatch, between the rotational positions of the corresponding axes belonging to the respective k axis groups of both the master robot 20 and the slave robot 30 (step S31). For example, if the variable k is 3, it is determined whether an absolute value of the difference between the rotational positions of the 6-th axes of the master robot 20 and the 6-th axes of the slave robot 30 is greater than a positive first threshold value. In addition, it is determined whether an absolute value of the difference between the rotation position of the 5-th axes of the master robot 20 and the rotation position of the 5-th axes of the slave robot 30 is greater than the positive first threshold value. In this step, if it is determined that, between the master robot 20 and the slave robot 30, the two comparisons show that the rotational positions of the corresponding two axes belonging to each of the k-th axis groups are not different from each other (step S31: NO), the processing proceeds to step S35.

On the other hand, if it is determined that, between the master robot 20 and the slave robot 30, at least one of the two comparisons shows that the rotational positions of the corresponding two axes belonging to each of the k-th axis groups are different from each other (step S31: YES), the motions of all the axes belonging to the k axis groups of the master robot 20 are displayed on the display unit 41 of the operation unit 40 (step S32). Then, all the axes included in the k-th axis group of the master robot 20 are driven (step S33). In detail, each axis in the k-th axis group of the master robot 20 is driven to rotate in the direction to make the rotational position of each axis in the k-th axis group of the master robot 20 match (bring closer to) the rotational position of the corresponding axis in the k-th axis group of the slave robot 30. In short, when eliminating the spatial mismatch between the posture of the master robot 20 and the posture of the slave robot 30, the axes to be driven is displayed on the display unit 41 of the operation unit 40 before the axes of the master robot 20 are actually driven.

Then, it is determined whether the rotational positions of the corresponding axes of the k-th axis group between the master robot 20 and the slave robot 30 are identical to each other (step S34). For example, if the variable k is 3, it is determined whether the absolute value of a difference between the rotational positions of the 6-th axes of both the master robot 20 and the slave robot 30 is smaller than a positive second threshold value which is smaller than the positive first threshold. In addition, it is determined whether the absolute value of a difference between the rotational position of the 5-th axes of both the master robot 20 and the slave robot 30 is smaller than the positive second threshold value. In these determination steps, if it is determined that at least one of the rotational positions of the corresponding axes belonging to the k-th axis group of the master robot 20 and slave robot 30 does not match each other (step S34: NO), the determination in step S34 is repeated.

In contrast, if it is determined that any of the rotational positions of the corresponding axes belonging to the k-th axis group of the master robot 20 and slave robot 30 matches each other (step S34: YES), the variable k is decremented to k-1 (step S35).

It is then determined whether the variable k is less than 1 or not (step S36). In other words, from the axis group 3 (composed of the two axes J6 and J5 on the arm tip end side) to the axis group 1 (composed of the two axes J1 and J2 on the base side) of the master robot 20, the operation to match the rotational positions of all the axes of the master robot 20 with those of the corresponding axes of the slave robot 30. In this judgment, if it is determined that the variable k is not smaller than 1 (step S36: NO), the processing is executed again from the process of step S31. In short, when eliminating a spatial mismatch provided between the posture of the master robot 20 and that of the slave robot 30, the axes of the master robot 20 are driven, group by group, in the order stating from the axis group composed of the axes J6 and J5 on the tip end side of the master robot 20. As a result, the posture of the master robot 20 is made to match the posture of the slave robot 30. In contrast, if the variable k is determined to be less than 1 (step S36: YES), this series of processes is terminated (END).

The present embodiment, detailed above, has the following advantages. Here, only the advantages that differ from the first embodiment are described, while those similar or equivalent to those obtained in the first embodiment are omitted.

When eliminating a spatial mismatch between the posture of the master robot 20 and the posture of the slave robot 30, the controller 26 drives the axes of the master robot 20 in sequence in units of groups containing two (or more) axes, thereby matching the posture of the master robot 20 to the posture of the slave robot 30. Therefore, in the posture matching operation, the posture of the master robot 20 is changed step by step. In the present embodiment, the axes of the master robot 20 are driven group by group in turn. It is thus possible to match the master robot 20 can be matched in their postures to the slave robot 30 faster than a case where the axes of the master robot 20 are driven one by one in a sequence.

When the controller 26 eliminates a spatial mismatch (gap) between the posture of the master robot 20 and the posture of the slave robot 30, the controller 26 drives the axes of the master robot 20 group by group in a sequence. This drive starts from, of the three axis groups, the axis composed of the axes J6 and J5 on the tip end side of the master robot 20. The posture of the master robot 20 is made to match the posture of the slave robot 30.

According to this configuration, the axes can be driven in the order starting from the axis group 3 with small changes in the posture of the master robot 20 to the axis group 1 with large changes in the posture. Therefore, the operator can predict that the changes in the posture of the master robot 20 will become larger gradually even in a stage where such changes are still smaller, making it easier for the operator to take safer measures.

The second embodiment may be implemented with the following modifications. The same or equivalent parts as or to those of the second embodiment will be omitted from the explanation with the same reference symbols or numbers still employed.

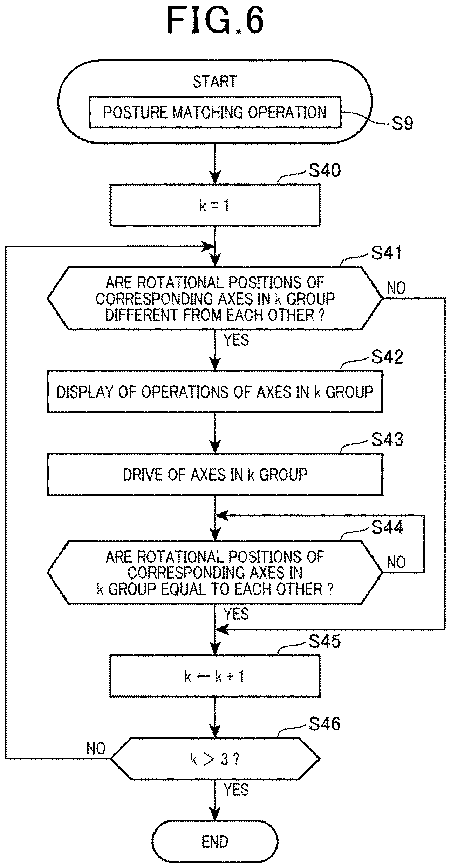

As shown in Fig. 6, the controller 26 (i.e., the CPU 26A) can also implement the processes of Fig. 5 with the following modifications.

Practically, instead of the step S30, a step of k = 1 is set at step S40, instead of the step S35, a step of k = k+1 is set at step S45, and instead of the step S36, a step where the variable k is determined to be greater than 3 or not is set at step S46. The processes S41 to S44 work similarly to steps S31 to S34 described.

That is, when eliminating the misalignment between the posture of master robot 20 and the posture of slave robot 30, the controller 26 drives the axes of the master robot 20 in the order from the axis group 1 composed of the axes J1 and J2 located closely to the base side in the master robot 20. Thus the master robot 20 is made to match in their postures the slave robot 30.

According to the foregoing configuration, when eliminating a spatial mismatch between the posture of the master robot 20 and the posture of the slave robot 30, the master robot 20 can be driven in turn from the axis group 1 with larger posture changes to the axis group 3 with smaller posture changes. Therefore, the operator can easily predict that such changes in the posture of the master robot 20 will become smaller in turn and how the final posture of the master robot 20 is in a state where the posture matching operation is completed. Moreover, the operator can easily notice, in an earlier stage, that the posture matching operation has started, and can easily take countermeasures such as moving away from the master robot 20 as quickly as possible.

Further modifications can be provided as follows.

The multiple groups dividing, in control for the posture matching operation, all the axes J1 - J6 of the master robot 20 may each contain three or more axes of the master robot 20.

Alternatively, when two axis groups are established, a first axis group may include the axes J1, J2, and J3 (three axes located the base side), and a second axis group may include the axes J4, J5, and J6 (three axes located on the arm tip end side, which are continuous to the one axis group). Of course, all the axes of the slave robot 30 are also divided into two axis groups corresponding to the two axis groups of master robot 20. Then, when eliminating a spatial mismatch between the posture of the master robot 20 and the posture of the slave robot 30, the master robot 20 can be driven in turn from the second axis groups with smaller changes in posture of the master robot 20 to the first axis group with larger changes in posture. In contrast, the master robot can be driven in turn from the first axis group with larger changes in the posture of the master robot 20 to the second axis group with smaller changes in the posture. According to these configurations, in the posture matching operation, while changing the postures of the master robot 20 step by step, the posture of the master robot 20 can be changed to the posture of the slave robot 30 faster than a case where the axes of the master robot 20 are driven every two axes.

### <Third embodiment>

A third embodiment of the master-slave robot system 10 will now be described.

In the present embodiment, when eliminating a spatial mismatch between the postures of the master and slave robots 20 t 30, the controller 26 (i.e., CPU 26A) is configured to control the axes of the master robot 20 and the slave robot 30 in the order starting from an axis group composed of the axis with the smallest difference in rotation positions between the mutually corresponding axes of the master and slave robots 20 and 30. This also makes the posture of the master robot 20 match the posture of the slave robot 30.

The other configurations are the same as those described in the first embodiment. Thus the same parts or functions as those in the first embodiment will be omitted from this explanation, with still using the same reference symbols and numbers.

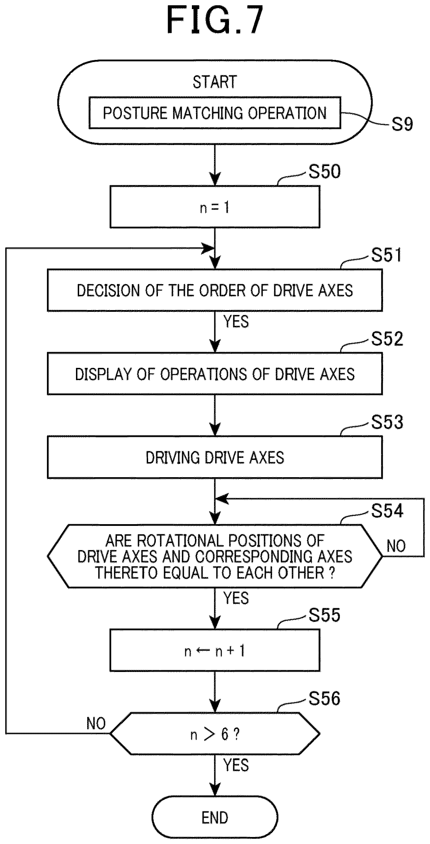

Fig. 7 is a flowchart showing the procedure for the posture matching operation according to the present embodiment.

This sequence of steps is executed by the controller 26 when the operator's operation allowing the start of the posture matching operation is accepted on the display 41 (step S9). In the present embodiment, the multiple groups each contain only one axis of the robot arm of the master robot 20. In other words, when the posture matching operation is activated, the controller 26 is configured to drive the axes J1 to J6 of the master robot 20, axis by axis, i.e., every axis, in a sequence.

First, the variable n is set as n = 1 (step S50). Then, the order of axes (drive axes) to be driven in master robot 20 is determined (step S51). In detail, axes with the smallest difference in rotational position among the mutually corresponding axes between both the master robot 20 and slave robot 30 is determined to be the first axis to be driven.

For example, if the absolute value of a difference in rotational position between the mutually corresponding 6-th axes is the smallest, the 6-th axes are determined to be driven first and assigned to the first axes. And, in the same way, if the absolute value of a difference in rotational position between the mutually corresponding 3-rd axes is the second smallest, the 3-rd axes are determined to be driven secondary and assigned to the second drive axes. In the same manner, the order of axes of the master robot 20 to be driven is decided.

As a modification, the size of a difference in rotational position between the corresponding axes can also be determined based on a ratio between the rotational position of the axis of the master robot 20 and the rotational position of the corresponding axis of the slave robot 30.

The operations of the drive axes of the master robot 20 are then started to be displayed by the display unit 41 of the operation unit 40 (step S52). The drive axes of the master robot 20 are driven in turn depending on the decided order (step S53). In driving the axes, each of the drive axes of the master robot 20 is rotated in a direction that brings the rotational position of that drive axis of the master robot 20 into alignment (closer) with the rotational position of the corresponding axis of the slave robot 30.

In this way, when eliminating a spatial mismatch between the posture of the master robot 20 and the posture of the slave robot 30, the axis to be driven is displayed by the display unit 41 of the operation unit 40 before the axis of the master robot 20 is actually driven.

It is then determined whether there is caused a match between the rotational positions of the driven axis of the master robot 20 and the corresponding axis of the slave robot 30 (step S54). If it is determined that such a match is not realized between the rotational positions of the drive axis of the master robot 20 and the corresponding axis of the slave robot 30 (step S54: NO), the processing waits for the next action while the termination step in S54 is repeated.

In contrast, if it is determined that there is a match between the rotational positions of both the drive axis of the master robot 20 and the corresponding axis of the slave robot 30 (step S54: YES), the variable n is incremented to n+1 (step S55).

It is then determined whether the variable n is greater than 6 (step S56). That is, for all the six axes of the master robot 20, it is judged whether the operation to match the rotational position of the drive axis of the master robot 20 with the rotational position of the corresponding axis of the slave robot 30 has been completed. If this judgment indicates that the variable n is not greater than 6 (step S56: NO), the processing is executed again from step S51. Meanwhile, if the variable n is judged to be greater than 6 (step S56: YES), this series of processing is completed (END).

According to the above configuration, when eliminating a misalignment (gap) between the posture of the master robot 20 and the posture of the slave robot 30, the axes of the master robot 20 can be driven in the order from the axis with the smallest amount of rotation to the axis with the largest amount of rotation. Therefore, the operator can predict that the amounts of rotation of the axes of the master robot 20 will increase in turn during the matching operation, which makes it easier for the operator to take safer measures before changes in the axis rotation becomes larger.

As a modification of the foregoing embodiment, in the process of step S51, the order in which the axes of the maser robot 20 can be reversed to the foregoing. That is, the order for driving the axes can be set to start axes whose mutual rotational difference is relatively larger, to axes whose mutual rotational difference is relatively smaller.

For example, if the absolute value of a difference in rotational position between the 6-th axes is the largest, the 6-th axes will be the first drive axis, and if the absolute value of a difference in rotational position between the 3-rd axes is the second largest, the 3-rd axes will be the second drive axis.

According to this configuration, when eliminating a spatial mismatch between the posture of the master robot 20 and the posture of the slave robot 30, the axes of the master robot 20 can be driven in the order starting from the axes with the largest rotation amount to the axes with the smallest rotation amount. Therefore, the operator can predict that the amount of rotation of the axes of the master robot 20 will become smaller in turn soon, making it easier to predict a posture of the master robot 20 when the posture matching operation are completed. Also, the operator can easily notice that the posture matching operation has started at an earlier stage, and can easily take countermeasures such as moving away from the master robot 20 at an earlier stage.

### <Fourth embodiment>

A fourth embodiment of the master-slave robot system 10 will now be described.

In the preset embodiment, each of the multiple groups (i.e., the three axis groups) that divide, in control for the posture matching operation, all the axes J1-J6 of the master robot 20 is composed of two axes of the master robot 20. The first axis group 1 is composed of two axes J1 and J2 (two consecutive axes from the base), the second axis group 2 is composed of two axes J3 and J4 (two consecutive axes continued from to the first axes group 1), and the third axis group 3 is composed of two axes J5 and J6 (two consecutive axes continued from the second axis group 2 and located closer to the arm tip end side). All the axes of the slave robot 30 are also divided, in control for the posture matching operation, into three axis groups corresponding to the three axis groups of the master robot 20. The other configurations are the same as those explained in the third embodiment.

The same or equivalent parts or functions as or to those in the third embodiment will be omitted from the explanation, with still adopting the same symbols or numbers.

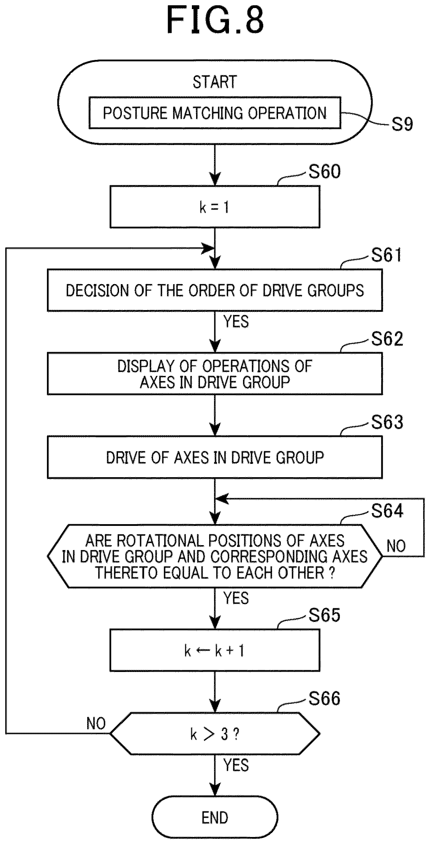

Fig. 8 is a flowchart showing the procedure of a posture matching operation.

The series of processes shown in Fig.8 is executed by the controller 26 (i.e., CPU 26A) when the operator's operation allowing the start of posture matching operation is accepted by the display 41. During the posture matching operation, the controller 26 is configured to drive the axes J1 to J6 of the master robot 20 group by group (i.e., every two axes) in turn in.

First, the variable k is set as k = 1 (step S60). The order of drive groups to be driven every group for the master robot 20 is determined (step S61).

More specifically, the order of drive group is determined such that the order starts from a group composed of two mutually corresponding axes whose rotational positions has the smallest difference between the master robot 20 and slave robot 30.

For example, if the sum of the absolute values of a difference in rotational positions between the 6-th axes and the absolute value of a difference in rotational positions between the 5-th axes is the smallest between the master and slave robots 20 and 30, the axis group 3 is assigned to the first drive group. In same way as the foregoing, if the sum of the absolute value of a difference in rotational positions between 3-rd axes and the absolute value of a difference in rotational position between 4-th axes is the second smallest between the master and slave robots 20 and 30, the second axis group 2 is assigned to the second drive group. And the remaining axis group 1 is assigned to the third drive group.

As a modification, the size of the difference in rotational positions between the corresponding axes can also be determined based on the ratio of the rotational position of each axis of the master robot 20 to the rotational position of the corresponding axis of the slave robot 30.

Then, all the axes included in the drive groups of the master robot 20 are displayed on the display unit 41 of the operation unit 40 such that the motions of the all the axes are depicted when the axes are driven (step S62).

All the axes included in the drive groups of the master robot 20 are driven group by group in a sequence based on the determined drive order (step S63).

In detail, each axis of the drive groups for the master robot 20 is rotated in the direction to make the rotational position of each axis of the drive group of the master robot 20 match (bring closer to) the rotational position of the corresponding axis of the slave robot 30. In this way, when eliminating a mismatch between the posture of the master robot 20 and the portion of the slave robot 30, the axes to be driven is displayed by the display 41 from before the axes of the master robot 20 are driven.

It is then determined whether there is a match between the rotational positions of the axes of the drive group of the master robot 20 and the corresponding axes of the slave robot 30 (step S64). In this step, if it is determined that the rotational positions of the axes of the drive group of the master robot 20 and the corresponding axes of the slave robot 30 do not match (step S64: NO), the processing waits for Yes determination at step S64 with its step S64 repeated.

In contrast, if it is determined that there is a match between the rotational positions of the axes of the drive group of the master robot 20 and the corresponding axes of slave robot 30 (step S64: YES), the variable k is incremented by k+1 (step S65).

It is then determined whether the variable k is greater than 3 or not (step S66). That is, for the three axis groups grouping the six axes of the master robot 20, the operation to match the rotation positions of the axes of each drive group of the master robot 20 with the rotation positions of the corresponding axes of the slave robot 30 is judged to have been completed or not. If this step determines that the variable k is not greater than 3 (step S66: NO), the processing is executed again from the process of step S61. On the contrary, if it is determined that the variable k is greater than 3 (S66: YES), this series of processing is completed (END).

The present embodiment detailed above has the following advantages, in which only advantages that differ from the third embodiment are described, and other advantages similar or identical to those obtained in the third embodiment are omitted.

When eliminating a mismatch between the posture of the master robot 20 and the posture of the slave robot 30, the controller 26 drives the axes of the master robot 20 in turn in units of groups containing two (i.e., plural) axes. In this way, the posture of the master robot 20 is matched to the posture of the slave robot 30. For this purpose, the posture of the master robot 20 is changed step by step, but group by group, in the posture matching operation. Therefore, the posture of the master robot 20 can be matched to the posture of the slave robot 30 faster than in the case where the axes of the master robot 20 are driven one by one in sequence.

When eliminating a mismatch between the posture of the master robot 20 and that of the slave robot 30, the axes of the master robot 20 can be driven in the order from the first axis group with the smallest amount of rotation to the last axis group with the largest amount of rotation. Hence, the operator can predict that the amounts of rotation of the axes of the master robot 20 will increase gradually as advancing in the posture matching operation, which makes it easier for the operator to take safer countermeasures.

Modifications of the present embodiment can be provided as follows.

In the process of step S61, the order to drive the axis groups of the master robot 20 can be set oppositely to the foregoing drive order, i.e., the order starts from the first axis group composed of axes whose mismatch amount is the largest among those calculated in all the axis groups, to the last axis group composed of axes with the mismatch amount is the lowest.

For example, if the sum of the absolute value of a difference in rotational positions between the 6-th axes and the absolute value of a difference in rotational positions between the 5-th axes is the largest, the axis group 3 is the first drive group, and if the sum of the absolute value of a difference in rotational positions between the 3-rd axes and the absolute value of a difference in rotational positions between the 4-th axes is the second largest, the second axis group 2 is assigned to the second drive group. The remaining axes are therefore assigned to the third drive group.

According to this configuration, when eliminating a mismatch between the postures of the master and slave robots 20 and 30, the axes of the master robot 20 can be driven in the order starting from the axis group with the largest rotation amount to the axis group with the smallest rotation amount.

Therefore, the operator can predict that an amount of rotation of the axes of the master robot 20 will become smaller in turn as advancing the posture matching operation, thereby making it easier to predict a future posture of the master robot 20 when the posture matching operations are completed. Also, the operator can easily notice that the posture matching operation already started at an early stage, and can easily take countermeasures such as moving away from the master robot 20 as quickly as possible.

Another modification is as follows.

In the foregoing third embodiment, each of the multiple axis groups dividing, in control for the posture matching operation, all the axes J1 - J6 of the master robot 20 may include three axes among all the axes of the master robot 20. For example, a first axis group includes the axes J1, J2, and J3 (three axes closer to the base), and a second axis group include the axes J4, J5, and J6 (three axes closer to the arm tip end side). All the axes of the slave robot 30 are also divided, in control for the posture matching operation, into two axis groups corresponding to the axis groups of master robot 20. Then, when eliminating a mismatch between the posture of the master robot 20 and the posture of the slave robot 30, the axes of the master robot 20 can be driven every group in a sequence according to the decided driver order starting from the axis group with the smallest amount of rotation.

By way of example, oppositely to the foregoing, when eliminating a mismatch between the postures of the master and slave robots 20 30, the axes of the master robot 20 can be driven every group in a sequence according to the drive order starting from the axis group with the largest amount of rotation of the axes.

According to these configurations, the posture of the master robot 20 is changed step by step in the posture matching operation. Therefore, the posture of the master robot 20 can be matched to the posture of the slave robot 30 faster than in the case where the axes of the master robot 20 are driven every two axes at a time in sequence.

Still alternatively, there can be provided anther drive order in which each of the axis groups can be composed a plurality of axes which are not always adjacent ones, but axes with one or more than one axes skipped therein.

That is, in the process of step S61, the drive order of axes can be decided such that the mutually corresponding axes on both the master robot 20 and the slave robot 30 are compared every axis and, between the master and slave robots 20 and 30, a set of corresponding axes with the smallest difference in rotational positions and another set of corresponding axes with the second smallest difference in rotational positions are combined into the first drive group. The remaining corresponding axes are subjected to the same manner of axis order decision.

For example, if the absolute value of a difference in rotational position between the 6-th axes is the smallest and the absolute value of a difference in rotational position between the 3-rd axes is the second smallest, the 6-th and 3-rd axes can be combined, in control for the posture matching operation, in the same first drive group. The remaining axes are also divided in the same manner.

According to this configuration, axis drive groups can be generated based on the difference in rotational positions between the corresponding axes, and the generated axis drive groups can be driven in order, group by group.

Oppositely to the above, in the process of S61, the drive order of axes can be decided such that the mutually corresponding axes on both the master robot 20 and the slave robot 30 are compared every axis, as described, and, between the master and slave robots 20 and 30, a set of corresponding axes with the largest difference in rotational positions and another set of corresponding axes with the second largest difference in rotational positions are combined into the first drive group. The remaining corresponding axes are subjected to the same manner of axis order decision.

### <Fifth embodiment>

A fifth embodiment of the master-slave robot system 10 will now be described.

In the fifth embodiment, in eliminating a mismatch between the posture of the master robot 20 and the posture of the slave robot 30, the controller 26 (i.e., CPU 26A) is configured to control motions of the axes of the master robot 20 in the order of the groups specified by the operator, whereby the posture of the master robot 20 may be matched to the posture of the slave robot 30.

Practically, the operator may arbitrarily set the axes to be included in each group.

The operator can specify both the axes which forms each group and the order of the groups to be driven in the posture matching operation, by manipulating operation unit 40. For example, each of multiple groups dividing, in control for the posture matching operation, all the axes J1 to J6 of the master robot 20 is able to include only one axis of the master robot 20.

According to this configuration, the operator can freely specify the order in which the axes of the master robot 20 are driven. For example, if there is an obstacle in the vicinity of the master robot 20, the operator can easily make the master robot 20 move to avoid the obstacle in the posture matching operation. Also, since the operator specifies the order in which the axes of the master robot 20 are driven, it is easier to predict a motion trajectory of the master robot 20.

In the present embodiment, the multiple groups dividing, in control for the posture matching operation, each of all the axes J1 - J6 of the master robot 20 may be formed by two or three axes of the master robot 20.

### <Other modifications>

The first to fifth embodiments and their modifications, described in the foregoing, may be implemented with the following changes. The same parts or components as those in the first to fifth embodiments and their modification are omitted from the explanation, with still employing the same reference numbers or symbols.

When eliminating a misalignment between the posture of the robot arm of the master robot 20 and the posture of the robot arm of the slave robot 30, the controller 26 may display the axis being currently driven by the master robot 20 along with or instead of the axis to be driven from now. According to this configuration, the axis being currently driven by the master robot 20 is displayed on the display 41, thus making it easier for the operator to recognize the axis being driven now, even when the amount of rotation of the axis is small.

In this display configuration, as a modification, neither the axis to be driven from now nor the axis being currently driven can be displayed on the display 41.

The master robot 20 may be equipped with a determination unit that determines whether the operator is applying an external force to the master robot 20. The determination unit determines the magnitude and direction of an external force (i.e., presence or absence of an applied external force) by, for example, measuring the current value of the motor installed in each axis and calculating the torque proportional to the current value. In this case, in eliminating a mismatch between the posture of the master robot 20 and the posture of the slave robot 30, the controller 26 control the axes of the master robot 20 so that the posture of the master robot 20 is matched to the posture of the slave robot 30, when it is determined by the determination unit that the operator is not applying an external force to the master robot 20.

A torque sensor can be installed in the motor, and the torque can be calculated from detection results of the torque sensor.

According to the above configuration, when the operator does not apply an external force to the master robot 20, the posture of the master robot 20 is made to match the posture of the slave robot 30 via the posture machining operation. However, if the operator is applying an external force to the master robot 20, the control for the posture matching operation cannot be activated. Therefore, when the operator is applying an external force to the master robot 20, it can be suppressed that the posture of the master robot 20 is changed to a posture different from the operator's intention, and the operator can be suppressed from feeling a surprise.

As a modification, the master robot 20 may be equipped with a determination unit that determines whether the operator is touching the master robot 20. The determination unit determines whether the operator is touching the master robot 20, based on detection results of, for example, a capacitance sensor installed on the robot arm 22. Then, when eliminating a mismatch between the posture of the master robot 20 and the posture of the slave robot 30, the controller 26 matches the posture of the master robot 20 with the posture of the slave robot 30 when it determines by the determination unit that the master robot 20 has not been touched.

Hence, according to this configuration, when the operator is not touching the master robot 20, the posture of the master robot 20 is matched to the posture of the slave robot 30. On the contrary, if the operator is touching the master robot 20, the control to match the posture of the master robot 20 with the posture of the slave robot 30 is not executed. Therefore, when the operator is touching the master robot 20, it can be suppressed that the posture of the master robot 20 is changed to a posture different from the operator's intention, and the operator can be prevented from feeling a surprise.

The inching mode is not limited to the configuration in which the operator inputs fine-tuning operations by the operation unit 40, but can also be realized by the detail control mode configuration described in JP-A-2009-55458.

The controller may be a single controller installed on the master robot 20 or slave robot 30 that controls both the master robot 20 and slave robot 30.

When the type (shape) of the master robot 20 and the type (shape) of the slave robot 30 are different, a spatial mismatch may occur between the posture of the master robot 20 and the posture of the slave robot 30 during the execution of the main slave-robot operation. In such a case, the controller 26 can perform control for foregoing posture matching operation.

The master robot 20 and slave robot 30 may be provided as robots of the same shape but different sizes. Alternatively, the master robot 20 and slave robot 30 may be provided as robots of the same shape and size.

Each of the foregoing embodiments and modifications thereof may be implemented in combination to the extent possible.

### [Brief Description of Partial Reference Signs List]

- 10: master-slave robot system,

- 20: master robot
- 22: robot arm (or simply referred to as robot)
- 22a: shoulder (serving as link)
- 22b: lower arm (serving as link)
- 22c: first upper arm (serving as link)
- 22d: second upper arm (serving as link)
- 22e: wrist (serving as link)
- 22f: flange (serving as link)
- 26: controller
- 30: slave robot
- 32: arm
- 36: controller
- JT1 - JT6: joints of robot arm, providing first to sixth axes
- J1: ...first axis
- J2: second axis
- J3: third axis
- J4: fourth axis
- J5: fifth axis
- J6: sixth arm

## Claims

1. A master-slave robot system comprising a master robot of which posture is changed by an external force applied by an operator to the master robot, a slave robot of which posture is changed to follow the posture of the master robot, and a controller which controls motions of the master and slave robots, wherein
each of the master and slave robots is provided with a robot arm, the robot arm having a plurality of links mutually connected serially and a plurality of joints each connecting, of the links, mutually adjacent two links such that the two links are relatively rotatable about a same axis provided by each of the joints, and
the controller is adapted to match the posture of the master robot with the posture of the slave robot, by driving, in control thereof, the axes of the robot arm of the master robot in an order of axis groups in a sequence, all the plural axes of the master robot being divided into the axis groups, when the controller eliminates a mismatch between the posture of the master robot and the posture of the slave robot.

2. The master-slave robot system according to claim 1, wherein each of the plural axis groups is composed of only one of the axes of the robot arm of the master robot.

3. The master-slave robot system according to claim 1 or 2, wherein, when eliminating a mismatch between the postures of the master and slave robots, the controller is adapted to drive the axes of the robot arm of the master robot in the order of axis groups, group by group, in the sequence, the order of axis groups starting from an axis group composed of the axis located on a tip end side of the robot arm of the master robot, such that the posture of the master robot is matched with the posture of the slave robot.

4. The master-slave robot system according to claim 1 or 2, wherein, when eliminating a mismatch between the postures of the master and slave robots, the controller is adapted to drive the axes of the robot arm of the master robot in the order of axis groups, group by group, in the sequence, the order of axis groups starting from an axis group composed of the axis located on a base side of the robot arm of the master robot, such that the posture of the master robot is matched with the posture of the slave robot.

5. The master-slave robot system according to claim 1 or 2, wherein, when eliminating a mismatch between the postures of the master and slave robots, the controller is adapted to drive the axes of the robot arm of the master robot in the order of axis groups, group by group, in the sequence, the order of axis groups starting from an axis group composed of mutually corresponding axes of both the master and slave robots, the mutually corresponding axes having a rotational positional difference smaller than that of the other axes, such that the posture of the master robot is matched with the posture of the slave robot.

6. The master-slave robot system according to claim 1 or 2, wherein, when eliminating a mismatch between the postures of the master and slave robots, the controller is adapted to drive the axes of the robot arm of the master robot in the order of axis groups, group by group, in the sequence, the order of axis groups starting from an axis group composed of mutually corresponding axes of both the master and slave robots, the mutually corresponding axes having a rotational positional difference larger than that of the other axes, such that the posture of the master robot is matched with the posture of the slave robot.

7. The master-slave robot system according to claim 1 or 2, wherein, when eliminating a mismatch between the postures of the master and slave robots, the controller is adapted to drive the axes of the robot arm of the master robot in the order of axis groups, group by group, in the sequence, the order of axis groups being designed by the operator, such that the posture of the master robot is matched with the posture of the slave robot.

8. The master-slave robot system according to claim 1 or 2, comprising a display unit,
wherein the controller is adapted to make the display unit display thereon an axis to be driven of the master robot before driving the axis of the master robot, during an operation in which the posture of the master robot is matched with the posture of the slave robot.

9. The master-slave robot system according to claim 1 or 2, comprising a display unit,
wherein the controller is adapted to make the display unit display thereon an axis of the master robot which is currently driven, during an operation in which the posture of the master robot is matched with the posture of the slave robot.
